# EUROPEAN PATENT SPECIFICATION

(11) **EP 1 500 265 B1**
(45) Date of publication and mention of the grant of the patent: **31.10.2012**
(21) Application number: 03741768.0
(22) Date of filing: 24.04.2003
(51) Int. Cl.: H04N 5/63, H04N 5/44

(54) **PRE-POWER-FAILURE STORAGE OF TELEVISION PARAMETERS IN NONVOLATILE MEMORY**
SPEICHERUNG VON FERNSEHPARAMETERN VOR EINEM STROMAUSFALL IN NICHTFLÜCHTIGEM SPEICHER
STOCKAGE AVANT PANNE D ALIMENTATION DE PARAMETRES TELEVISUEL S DANS UNE MEMOIRE NON VOLATILE

(30) Priority: 29.04.2002 US 376425 P; 17.01.2003 US 346640
(43) Date of publication of application: 26.01.2005
(73) Proprietor: Thomson Licensing, 92130 Issy-les-Moulineaux (FR)
(72) Inventor: DINWIDDIE, Aaron, Hal, Cicero, IN 46034 (US); TESTIN, William, John, Indianapolis, IN 46236 (US); JOHNSON, Gene, Harlow, Carmel, IN 46032 (US)
(74) Representative: Lindemann, Robert
(86) International application number: PCT/US2003/012889
(87) International publication number: WO 2003/094509

(56) References cited:
- EP-A- 0 544 252
- DE-C1- 19 718 479
- US-A- 4 591 914
- US-A- 4 656 604
- US-A- 4 677 541
- US-A- 4 750 040
- US-A- 4 858 006
- US-A- 5 689 676
- US-A- 5 831 347
- US-A- 6 149 316
- US-A1- 2002 008 775
- US-B1- 6 327 639

## Description

This application claims the priority of U.S. Provisional application 60/376,425, filed April 29, 2002 and US Patent Application 10/346,640, filed January 17, 2003.

### Field of the Invention

This invention relates to television or video devices.

### Background of the Invention

Microprocessor controls are widely used in interactive control of appliances and communication devices by accepting commands, and in some cases by presenting choices to the user, and adapting the command or selection to appropriate control of the controlled device. A well-known aspect of some such controls is that a power failure, in the absence of battery back-up in the controlled device, results in loss of some or all of the set-up andor the currently selected parameters.

In the context of a television receiver, the time-of-day clock can be maintained during a power failure by a battery, which may be of the rechargeable type. However, such batteries are expensive, and their life tends to be limited, so that battery backup of television clocks is not much used.

U.S. Patent 4,750,040, issued June 7, 1988 in the name of Hakamada, describes the use of a special, large value condenser or a capacitor bank to prevent the time display data in the random access memory of the micro-computer from being erased when a power failure occurs. Another described approach to dealing with such power outages in a digitally controlled television receiver is to provide a nonvolatile memory connected to the microcomputer so that when the power source for the television is turned off, the channel selection data, sound volume data, and the like, which are typically stored in the random access memory portion of the micro-computer, may be transferred to the nonvolatile memory for storage. The clock data is not transferred to nonvolatile memory.

A typical nonvolatile memory (NVM) which is useful for storing data may be, for example, an electrically erasable programmable read-only memory (Eeprom) of the type ST M24C08. A limiting factor in the use of such nonvolatile memory lies in the limited number of write cycles for which the memory is rated. The ST M24C08 Eeprom has a rating of 100,000 (100K) erase/write cycles. Due to this limitation on the number of erase/write cycles, it may be desirable to store certain data values or user parameters which may change frequently, such as "last used channel" and the current or present "time of day (TOD)" in a nonvolatile memory such as the ST M24C08 Eeprom. Current television receivers do in fact store other information in nonvolatile Eeprom memory, such as the channel scan list and picture settings that change infrequently. If frequently changing data were to be stored in such an Eeprom, there is the possibility of data corruption by having bit(s) of non-volatile memory "stick" in either the logic high or logic low state. The problem may be better understood by considering the television user with a remote control who makes 100 channel changes per hour during channel surfing, and views television for eight hours a day. This would result in the writing into nonvolatile memory 292,000 times per year. Such use would exceed the rated life within the first year of use.

According to an aspect of the invention, the user parameter or TOD data is stored at a fixed time after the last change to the parameter or TOD. Should multiple channels changes be made during a commercial, for example, the "last channel tuned" information would be stored in nonvolatile memory only at a time after the last of the group of channels was tuned. This is accomplished by requiring a time delay after each channel is tuned before storing that channel, and the time delay is reset to its initial value if a second channel is accessed before the original time delay has expired.

According to another aspect of the invention, the time of day (TOD) or user parameters are stored at multiple locations in the nonvolatile memory, so as to distribute the read/write cycles for a given parameter or TOD over plural storage sites or locations. By the use of multiple storage sites, together with a means for detecting the "latest value," the number of read/write cycles available for a given parameter or TOD can be increased by the number of multiple locations. As an example, the allowable read/write cycles of storage in a nonvolatile memory such as an Eeprom can be increased by a factor of ten, that is from 100,000 to 1,000.000 cycles, by distributing the information among 10 storage locations in the Eeprom.

According to a further aspect of the invention, by storing the parameters such as "last channel tuned" and "RF switch status" prior to the occurrence of a power failure, large storage capacitors are not required to keep the microprocessor in operation in the event of the power failure..

### Summary of the Invention

A video display apparatus according to an aspect of the invention comprises a source of a plurality of signals including a first signal and a second signal, a source of a video signal, and a non-volatile memory. The video display apparatus also comprises a processor for controlling signal processing of the video signal. The processor is responsive to the plurality of signals for updating a common parameter, in accordance with each of the plurality of signals, during each of a plurality of intervals, respectively. The processor selectively stores at least the first signal in the non-volatile memory to provide for a back-up of the common parameter when a loss of power occurs and updating the common parameter, after a restoration of the power, in accordance with a signal of the plurality of signals that had been stored in the non-volatile memory prior to the loss of power. The processor selectively stores the first signal in a first memory space and excludes from the first memory space the second signal to reduce a total number of memory access cycles in the first memory space.

According to a particular aspect of the invention, the video display apparatus avoids storing of the second signal anywhere in the non-volatile memory. The second signal may be stored at a second memory space. The processor may update the common parameter, after the restoration of power, in accordance with a last one of the plurality of signals that had been stored in the non-volatile memory prior to the loss of power. The common parameter, in one aspect of the invention, is associated with one and not with the other ones of the following functions: (a) channel selection, (b) audio volume selection, (c) video sharpness selection, (d) contrast selection, (e) brightness selection, (f) color selection, (g) tint selection, (i) RF/video input status selection and (j) a time-of-day display. According to another aspect of the invention, the storing of a signal of the plurality of signal in the non-volatile memory is prevented as long as a length of an interval between immediately occurring signals of the plurality of signals is shorter than a predetermined minimum value.

### Brief Description of the Drawing

FIGURE 1 is a simplified block diagram of a television receiver according to an aspect of the invention;
FIGURE 2 is a simplified flow chart or diagram, according to an aspect of the invention, illustrating the logic for control of storage of various television parameters in response to change in the parameter;
FIGURE 3 is a simplified flow chart or diagram illustrating the logic for controlling the restoration of information to the receiver from nonvolatile storage; and
FIGURE 4 is a simplified flow chart or diagram illustrating the logic for controlling the storage of time-of-day clock information sequentially in a set of storage registers of a nonvolatile memory.

### Description of the Invention

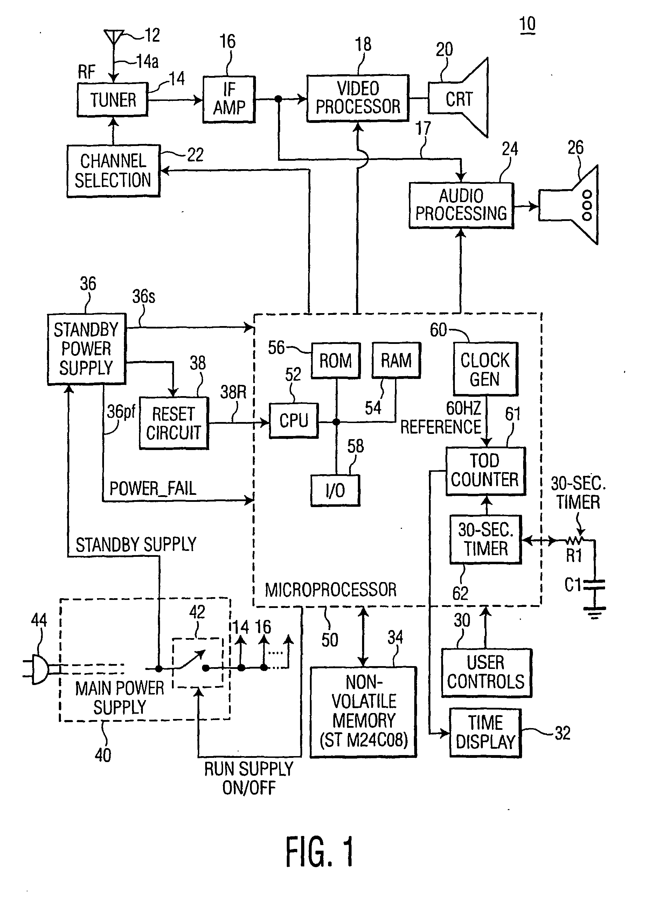

In FIGURE 1, a television receiver 10 includes a tuner 14 with an antenna terminal 14a for connection to an antenna illustrated as 12. A channel control circuit illustrated as a block 22 controls the channel selected or tuned by tuner 14. Tuner 14 produces an intermediate-frequency (IF) representation of the tuned channel, and applies the IF signal by way of an intermediate-frequency amplifier (IF amp) 16 to a video processing arrangement, illustrated as a block 18. Video processing arrangement 18 decodes the video as may be required, and processes the video in accordance with various parameters such as color, saturation, brightness, contrast, sharpness or peaking, and possibly other video-related parameters, to produce analog video for application to a picture tube or cathode-ray tube (CRT) 20. Picture tube deflection is provided by means which are not illustrated. The intermediate-frequency signal from IF amplifier 16 is also applied by a path 17 to an audio processor illustrated as a block 24, which processes the audio signal component pursuant to various parameters such as audio volume, channel separation, and tone or other frequency-selective parameter, to produce analog audio signal for application to a speaker system illustrated as a single speaker 26.

Television receiver 10 is controlled by a microprocessor illustrated as 50, which includes a central processing unit (CPU) 52, a random-access memory (RAM) 54 in which current calculations are performed and stored in a volatile manner, a read-only memory (ROM) 56 in which microprocessor programs or instructions are stored in nonvolatile (NV) form, and various input-output (I/O) ports, illustrated as a block 58, for communicating between the microprocessor 50 and the remainder of television receiver 10. Microprocessor 50 is connected by various signal paths to video processor 18, to audio processor 24, and to channel selection block 22, and produces the various control parameters for those blocks under the command of user controls, illustrated together as a block 30. The user controls 30 may be set-mounted controls or they may be associated with a remote transmitter-receiver control.

Main power supply 40 receives AC mains power from a source illustrated as a plug 44. In general, main power supply 40 produces various direct voltages which are applied to the various portions of the television receiver 10, such as the tuner 14 and IF amp 16, as well as to other elements. Main power supply 40 also produces voltage which is applied to a standby power supply 36. Standby power supply 36 produces a voltage, as for example 5 volts, for application by way of a path 36s to the microprocessor 50, for energizing the microprocessor during normal operation and also during those intervals in which the television receiver 10 is OFF. The various direct (DC) voltages produced by main power supply 40 are coupled to the various components of the television receiver 10 by way of a controllable switch illustrated as mechanical switch 42, which is controllable in response to a Run Supply ON/OFF signal from microprocessor 50. A reset circuit illustrated as a block 38 responds to a standby voltage on path 36S which becomes insufficient to operate the microprocessor by producing a microprocessor reset signal on a path 38r, which shuts down the microprocessor. The microprocessor 50 also monitors a power_fail line 36pf to determine the presence of conditions, such as decrease in the standby power supply voltage, associated with a failure of power.

Within microprocessor 50 of FIGURE 1, a clock source 60 produces various clock signals, including a 60 Hz signal which is counted by a time-of-day (TOD) portion 61 of the microprocessor to provide time-of-day information. The time of day is displayed on a display illustrated as a block 32. A 30-second timer block 62 associated with microprocessor 50 is connected to an external resistance-capacitance circuit including resistor R1 in series with a capacitor C1. The time constant of R1/C1 is selected to be near 30 seconds in one embodiment of the invention.

In operation of the arrangement of FIGURE 1, the microprocessor 50 is maintained in an ON condition during those times in which power is applied, including during Standby. Microprocessor 50 responds to user commands from user controls 30 for, among other things, switching switch 42 of the main power supply 40 to its ON or conducting state, so as to couple direct voltages to the various components such as 14, 16 of television receiver 10.

A voltage source (not illustrated) is coupled to the series resistance-capacitance circuit R1/C1 during normal operation. In the event of a power failure, the voltage source fails, and capacitor C1 discharges. The time constant of R1 in conjunction with C1 is selected so that the capacitor voltage decreases to a value below a selected value at a time about 30 seconds after its voltage source is removed. The 30-second value is established by the desire to not have the time-of-day clock display an incorrect time in the event that the power outage exceeds 30 seconds. When power is restored, the microprocessor examines the voltage remaining on capacitor C1. If the voltage remaining on capacitor C1 is less than the selected value, microprocessor 50 deems the power outage to have been of a duration of greater than 30 seconds, and disables the clock display or otherwise renders the time-of-day clock non-readable, so that the user must re-set the clock if the correct time is to be displayed. A description of a time-of-day arrangement that examines the length of the power outage duration appears in U.S. Patent 5,831,347, issued November 3, 1998 in the name of Landis et al.

A nonvolatile memory (NVM) 34, which is a type ST M24C08, is coupled to the microprocessor, for storing data under the command of the microprocessor. Nonvolatile memories which are useful for this purpose include electrically erasable programmable read-only memories (Eeproms). A limiting factor in the use of such nonvolatile memories lies in the limited number of write cycles for which the memory is rated.

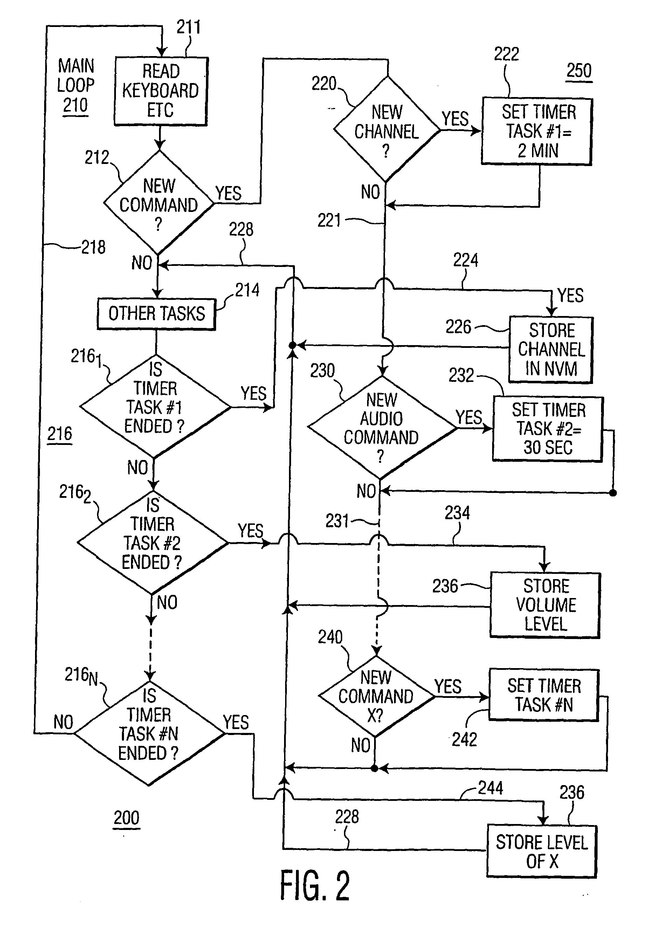

FIGURE 2 is a simplified flow or logic diagram 200 according to an aspect of the invention, operating in microprocessor 50 of FIGURE 1, for determining whether a given parameter has been changed or selected by the user, and for storing the new value of the parameter. In FIGURE 2, the logic flows around a main logic loop designated generally as 210. Within loop 210, a number of tasks are associated with operation of the system as a whole, the combination of which are represented by a block 211, designated "read keyboard," but which may include a large variety of tasks. Eventually, the logic in main loop 210 reaches a decision block 212, which determines whether a new command has been made. If no new command has been made, the logic leaves decision block 212 by the NO output, and proceeds to a block 214 designated "other tasks" which also have to do with general operation of the microprocessor 50 of FIGURE 1 in controlling television receiver 10. From block 214, the logic proceeds to a cascade or string 216 of decision blocks 216₁, 216₂, ..., 216_{N}, which represents a review of extant timing tasks, to see if they have been completed. If none of the timing tasks have been completed (or if there are no current timing tasks), the logic leaves the cascade of decision blocks. From cascade 216, the logic proceeds around main loop 210 by way of a path 218 and returns to block 212.

If decision block 212 of FIGURE 2 determines that a new command has been issued, the logic leaves the main loop and proceeds by way of the YES output of decision block 212 to a decision block 220 of a cascade or string 250 of decision blocks. Decision block 220 determines whether the new command is a command to switch to another channel. If not, the logic leaves decision block 220 by way of the NO output, and proceeds over a logic path 221 to a further decision block 230. If decision block 212 determines that a channel selection has been made, the logic leaves by way of the YES output, and proceeds to a block 222, which represents the setting of a first timer task (timer task #1) to some time, which in this example is two minutes. The logic then leaves block 222 and proceeds by way of path 221 to decision block 230. Decision block 230 determines whether the command identified by decision block 212 was a new audio command, such as, for example, a selection of a new volume level. If not, the-logic leaves decision block 230 by way of a path 231, and proceeds (through any number of decision blocks) to a last decision block 240. Decision block 240 determines if the command identified by decision block 212 was a command, designated generally as "X," representing the last of the available commands. In general, if the logic of FIGURE 2 reaches decision block 240, the logic will leave decision block 240 by the YES output, and proceed to block 242. In order to provide robustness in the event of a temporary logic upset, the logic leaves decision block 240 by way of the NO output in the event that the command has not been identified in the string 250 of decision blocks, and returns to block 214 of the main loop 210 by way of return logic path 228. Block 242 represents the setting of a timer task #N to some time which relates to the command "X."

At some point along string 250 of decision blocks 220, 230, ..., 240, the command which led the logic to the string 250 should be identified by the relevant decision block, and a related timer task set. For example, if decision block 230 identifies a new audio command such as a volume change, the logic leaves decision block 230 by the YES output, and proceeds to "set timer" block 232, which sets the timer task to a suitable time, such as 30 seconds. From block 232, the logic flows back to path 231 to continue to the end of the string 250 and back to the main loop 210. Similarly, if decision block 240 identifies command "X," the logic leaves decision block 240 and flows to a block 242, which represents the setting of a timer task to a time delay suited to the expected use of parameter "X." In all cases, after the timer task has been set, the logic returns to main logic path 210.

As the logic flows around the main logic path 210 of FIGURE 2, the various timer tasks are tested in cascade 216 of decision blocks. Thus, decision block 216₁ tests to see if timer task #1 has been completed. If so, decision block 216₁ routes the logic by way of a path 224 to a block 226, representing storage of the new-channel information in non-volatile memory. If decision block 216₁ finds no completed timer task #1, it passes the logic to decision block 216₂, which tests to see if timer task #2 has been completed. If so, decision block 216₂ routes the logic by way of a path 234 to a block 236, representing storage of the new-volume information in non-volatile memory. The logic proceeds until, if it reaches decision block 216_{N}, the Nth timer task is tested. If the Nth timer task is completed, the logic is routed by way of a path 244 to block 236, representing storage of parameter X in nonvolatile memory. From any of blocks 226, 236, ..., or 246, the logic returns to the main logic loop 210 by way of path 228.

Thus, the main logic loop 210 of FIGURE 2 constantly monitors for new user commands, such as channel selection, audio volume, and the like. When a new command is received, a delay is introduced, which is selected to provide a compromise between immediate storage of each channel or other parameter as it is selected to provide most user-friendly response and the need to minimize the number of uses of the memory locations of the nonvolatile memory. In the case of channel selection, it is well known that some persons may "surf" channels in order to find something which they wish to watch. If each channel were to be stored in nonvolatile memory as it was selected, the memory would be used possibly once a second during the surfing period, which could last, let us say, two minutes. This would represent the storage in nonvolatile memory of 120 channels in sequence, none of which are of much interest to the user of the television receiver. Instead, a two-minute delay is introduced before the current channel is stored in nonvolatile memory, to allow the user to "set" or determine a channel that he wishes to view. It should be understood that the delay time may be widely variable, depending not only upon the type of information or parameter being selected, but also upon the opinion of the manufacturer as to how the receiver will be used, and what delay provides the best compromise. In the case of the audio volume command, the appropriate level is often achieved by incrementing one step at a time in the desired direction, that is to say in the direction of an increase or decrease in volume. One may estimate that most volume control operations will be finished within 15 seconds, so a 30-second delay should allow just about all volume change commands to be completed before storage of the last selected volume. Naturally, the timer task associated with a particular command, such as the timer task #N associated with block 242 of FIGURE 2 for task X, would have a delay which would be related to the time during which commands would continue for parameter X. Using this approach, the number of storage cycles to a given memory cell of nonvolatile memory 34 is reduced.

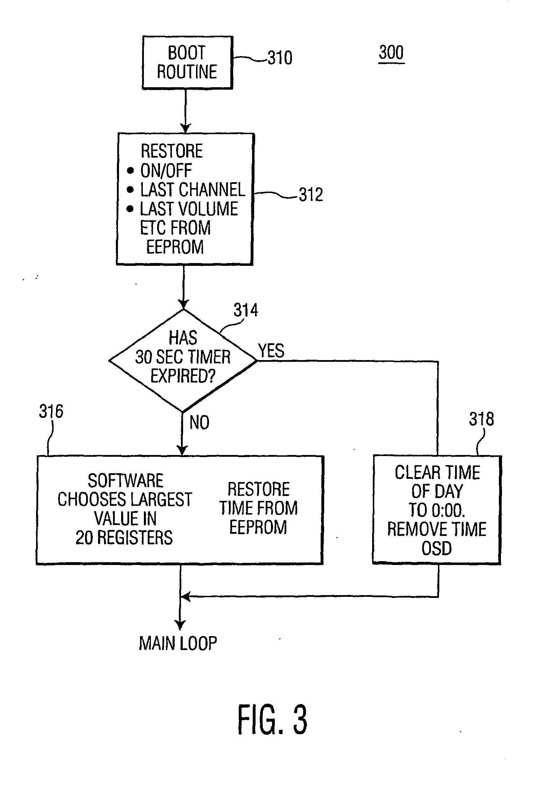

FIGURE 3 is a simplified logic diagram 300 illustrating how the stored user parameters or commands are restored following a power failure. In FIGURE 3, the logic starts with a "boot routine" block 310, and proceeds to a block 312, representing restoration (if appropriate) of the ON/OFF parameter, the last channel, the last volume, and such other parameters as may be available. From block 312, the logic flows to a decision block 314, which represents the examination of the 30-second timer (R1/C1 of FIGURE 1) to see if it has expired. This can amount to no more than looking to see if there is sufficient voltage remaining thereon to provide a logic high state, whereupon the timer has not expired. A logic low state then would be indicative of an expired 30-second timer. If the 30-second timer has not expired, the logic leaves decision block 314 by the NO output, and proceeds to a block 316. Block 316 of FIGURE 3 represents the restoration to the clock 60 of FIGURE 1 of the time currently stored in nonvolatile memory 34. On the other hand, if decision block 314 of FIGURE 3 finds that the 30-second timer has expired, the logic leaves decision block 314 by the YES output, and proceeds to a block 318, which represents the clearing of the time of day in clock 60 (setting to 00:00) of FIGURE 1, and the disabling of the clock so it cannot increment away from the cleared value of time of day.

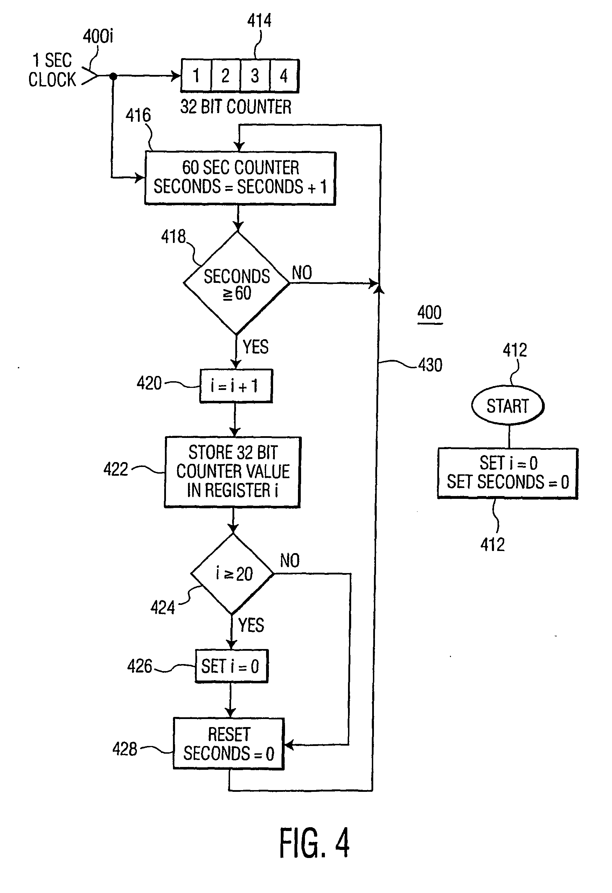

FIGURE 4 is a simplified logic diagram or chart illustrating the storing of the time of day, once per minute, at different locations in the nonvolatile memory, so as to distribute the uses of nonvolatile memory over 20 different registers. The logic 400 of FIGURE 4 starts at a START block 410, and proceeds to a block 412, which represents the setting of a count or running variable i to a value of i=0, and the setting of the "seconds" parameter to zero. A one-second clock signal is applied by way of a clock input port 400i to a 32-bit clock counter 414, for incrementing the indicated value to match the time of day. Control of the storage in nonvolatile memory is controlled by that portion of the logic including blocks 416, 418, 420, 422, 424, 426, 428, and path 430. Block 416 receives the one-second clock counts from input port 400i, and recurrently increments the current count, seconds = seconds + 1. A decision block 418 receives the current count from block 416, and compares the count to the number 60. So long as the count of block 416 has not reached 60, the logic leaves decision block 418 by the NO output and returns to block 416 by way of path 430. At the one-minute point, block 416 will produce a count of 60. Decision block 418 responds to the count of 60 by routing the logic by way of its YES output port to a block 420, which increments running variable i=i+1. From block 420, the logic flows to a block 422, which represents the storage in nonvolatile memory of the value TOD counter 414 in the ith memory location, which for the first iteration will correspond with the zeroth memory location. From block 422, the logic flows to a decision block 424, which compares the current value of running variable i with the maximum value 20. If the current value of running variable i is less than or equal to 20, the logic leaves decision block 424 by the NO output, and proceeds to block 428, which represents the resetting of seconds (that is, the count of counter 416) to a value of zero, so that counter 416 can again begin to count a sixty-second interval. From block 428, the logic returns by way of logic path 430 to block 416. If the current value of running variable i were to be found to be greater than 20 by decision block 424, the logic would be routed to a block 426, representing the resetting of the running variable i to a value of zero. Thus, the current clock value is stored every sixty seconds in the ith memory location of nonvolatile memory, where there are 20 individually addressable nonvolatile memory locations available for storage of time of day information. That is, during the first iteration through the logic of FIGURE 4, the clock value is stored in the first of the 20 memory locations of nonvolatile memory, during the second iteration, in the second memory location, ..., and during the 20th iteration, in the 20th memory location. The next following minute, the current value of TOD is again stored in the first memory location, overwriting the previous value. The logic continues, placing the current time of day sequentially in one of the available memory locations, overwriting the one currently stored therein. Deciding on the correct memory location to read in order to restore the clock after a short power outage is very easy, requiring only a simple selection of the most recent or latest time-of-day values stored in the nonvolatile memory. This is done by choosing the largest value from among the twenty registers, as shown by block 316 of FIGURE 3. This arrangement can of course be used with more than 20 memory locations or fewer, as desired, for the desired useful life multiplication.

Thus, any one register of nonvolatile memory is used only once every 20 minutes, even though the clock value is being stored each minute. This allows information to be stored for a period 20 times longer than if the information were to be stored in a single location. It will be clear that any desired life multiplier could be used, simply by allocating a sufficient number of registers of nonvolatile storage to the storage of the parameter in question.

## Claims

1. A video display apparatus, comprising:
a source of a plurality of signals, each of said signals being generated in response to a user changing a parameter of a signal processing of a video signal in said video display apparatus, said parameter being associated with one of channel selection, audio volume selection, video sharpness selection, contrast selection, brightness selection, color selection, tint selection and RF/video input status selection;
a source of said video signal;
a non-volatile memory; and
a processor for controlling said signal processing of said video signal, said processor being adapted to update said parameter in response to a corresponding one of said plurality of signals, wherein said processor is adapted to selectively store a first one of said corresponding one of said plurality of signals in response to the user changing said parameter in said non-volatile memory to provide for a back-up of said parameter when a loss of power occurs, and to update said parameter, after a restoration of the power, in accordance with a corresponding signal that had been stored in said non-volatile memory prior to the loss of power, wherein said processor is adapted to store said first one of said corresponding one of said plurality of signals in a first memory space, and to store a subsequent, second one of said corresponding one of said plurality of signals generated in response to the user changing said parameter in a second memory space to reduce a total number of memory access cycles in said first memory space,
wherein the storing of the second one of said corresponding one of said plurality of signals generated in response to the user changing said parameter in said non-volatile memory is prevented as long as a length of a time interval between subsequent signals of said corresponding one of said plurality of signals generated in response to the user changing said parameter is shorter than a predetermined minimum value.

2. A method of operating a video display apparatus, the apparatus comprising:
a source of a plurality of signals, each of said signals being generated in response to a user changing a parameter of a signal processing of a video signal in said video display apparatus, said parameter being associated with one of channel selection, audio volume selection, video sharpness selection, contrast selection, brightness selection, color selection, tint selection and Rf/video input status selection;
a source of said video signal;
a non-volatile memory; and
a processor for controlling said signal processing of said video signal, the method comprising the steps of:
said processor updating said parameter in response to a corresponding one of said plurality of signals,
said processor selectively storing a first one of said corresponding one of said plurality of signals in response to the user changing said parameter in a first memory space of said non-volatile memory to provide for a back-up of said parameter when a loss of power occurs, said processor storing a second one of said corresponding one of said plurality of signals generated in response to the user changing said parameter in a second memory space to reduce a total number of memory access cycles in said first memory space,
and
said processor updating said parameter, after a restoration of the power, in accordance with a corresponding signal that had been stored in said non-volatile memory prior to the loss of power,
wherein the method further comprises preventing storing of the second one of said corresponding one of said plurality of signals generated in response to the user changing said parameter in said non-volatile memory as long as a length of a time interval between subsequent signals of said corresponding one of said plurality of signals generated in response to the user changing said parameter is shorter than a predetermined minimum value.

## Patentansprüche

1. Videoanzeigevorrichtung, umfassend:
eine Quelle einer Vielzahl von Signalen, wobei jedes der Signale in Reaktion darauf erzeugt wird, dass ein Nutzer einen Parameter einer Signalverarbeitung eines Videosignals in der Videoanzeigevorrichtung ändert, wobei der Parameter der Kanalauswahl, der Audiolautstärkeauswahl, der Videoschärfeauswahl, der Kontrastauswahl, der Helligkeitsauswahl, der Farbauswahl, der Farbtonauswahl oder der HF/Video-Eingangsstatusauswahl zugeordnet ist;
eine Quelle des Videosignals;
einen nichtflüchtigen Speicher; und
einen Prozessor zum Steuern der Signalverarbeitung des Videosignals, wobei der Prozessor dazu eingerichtet ist, den Parameter in Reaktion auf ein entsprechendes der Vielzahl von Signalen zu aktualisieren, wobei der Prozessor dazu eingerichtet ist, in Reaktion darauf, dass der Nutzer den Parameter ändert, selektiv ein erstes des entsprechenden der Vielzahl von Signalen in dem nichtflüchtigen Speicher zu speichern, um eine Sicherung des Parameters bereitzustellen, wenn ein Ausfall der Stromversorgung eintritt, und den Parameter nach einer Wiederherstellung der Stromversorgung in Übereinstimmung mit einem entsprechenden Signal, das vor Ausfall der Stromversorgung in dem nichtflüchtigen Speicher gespeichert worden ist, zu aktualisieren, wobei der Prozessor dafür ausgelegt ist, das erste entsprechende der Vielzahl von Signalen in einem ersten Speicherraum zu speichern und ein nachfolgendes, zweites des entsprechenden der Vielzahl von Signalen, die in Reaktion darauf erzeugt werden, dass der Nutzer den Parameter ändert, in einem zweiten Speicherraum zu speichern, um eine Gesamtzahl der Speicherzugriffszyklen in dem ersten Speicherraum zu verringern,
wobei das Speichern des zweiten des entsprechenden der Vielzahl von Signalen, die in Reaktion darauf erzeugt werden, dass der Nutzer den Parameter ändert, in dem nichtflüchtigen Speicher verhindert wird, solange eine Länge eines Zeitintervalls zwischen aufeinanderfolgenden Signalen des entsprechenden der Vielzahl von Signalen, die in Reaktion darauf erzeugt werden, dass der Nutzer den Parameter ändert, kürzer als ein vorgegebener Minimalwert ist.

2. Verfahren zum Betreiben einer Videoanzeigevorrichtung, wobei die Vorrichtung umfasst:
eine Quelle einer Vielzahl von Signalen, wobei jedes der Signale in Reaktion darauf erzeugt wird, dass ein Nutzer einen Parameter einer Signalverarbeitung eines Videosignals in der Videoanzeigevorrichtung ändert, wobei der Parameter der Kanalauswahl, der Audiolautstärkeauswahl, der videoschärfeauswahl, der Kontrastauswahl, der Helligkeitsauswahl, der Farbauswahl, der Farbtonauswahl oder der HF/Video-Eingangsstatusauswahl zugeordnet ist;
eine Quelle des Videosignals;
einen nichtflüchtigen Speicher; und
einen Prozessor zum Steuern der Signalverarbeitung des Videosignals, wobei das Verfahren die folgenden Schritte umfasst:
der Prozessor aktualisiert den Parameter in Reaktion auf ein entsprechendes der Vielzahl von Signalen, der Prozessor speichert in Reaktion darauf, dass der Nutzer den Parameter ändert, selektiv ein erstes des entsprechenden der Vielzahl von Signalen in einem ersten Speicherraum des nichtflüchtigen Speichers, um eine Sicherung des Parameters bereitzustellen, wenn ein Ausfall der Stromversorgung eintritt, der Prozessor speichert in Reaktion darauf, dass der Nutzer den Parameter ändert, ein zweites des entsprechenden der Vielzahl von Signalen, die in Reaktion darauf erzeugt werden, dass der Nutzer den Parameter ändert, in einem zweiten Speicherraum, um eine Gesamtzahl der Speicherzugriffszyklen in dem ersten Speicherraum zu verringern,
und
der Prozessor aktualisiert den Parameter nach einer Wiederherstellung der Stromversorgung in Übereinstimmung mit einem entsprechenden Signal, das vor dem Ausfall der Stromversorgung in dem nichtflüchtigen Speicher gespeichert worden ist, wobei das Verfahren ferner umfasst:
Verhindern des Speicherns des zweiten des entsprechenden der Vielzahl von Signalen, die in Reaktion darauf erzeugt werden, dass der Nutzer den Parameter ändert, in dem nichtflüchtigen Speicher, solange eine Länge eines Zeitintervalls zwischen aufeinanderfolgenden Signalen des entsprechenden der Vielzahl von Signalen, die in Reaktion darauf erzeugt werden, dass der Nutzer den Parameter ändert, kürzer als ein vorgegebener Minimalwert ist.

## Revendications

1. Un appareil d'affichage vidéo comprenant :
une source d'une pluralité de signaux, chacun desdits signaux étant généré en réponse à un utilisateur modifiant un paramètre d'un traitement de signal d'un signal vidéo dans ledit appareil d'affichage vidéo, ledit paramètre étant associé à l'une des sélections parmi la sélection du canal, la sélection du volume audio, la sélection de la netteté vidéo, la sélection du contraste, la sélection de la luminosité, la sélection de la couleur, la sélection de la teinte et la sélection du statut d'entrée vidéo/RF ;
une source dudit signal vidéo ;
une mémoire non volatile ; et
un processeur pour le contrôle dudit traitement de signal dudit signal vidéo, ledit processeur étant adapté pour mettre à jour ledit paramètre en réponse à un élément correspondant de ladite pluralité des signaux, où ledit processeur est adapté pour stocker de manière sélective un premier élément dudit élément correspondant de ladite pluralité de signaux en réponse à l'utilisateur modifiant ledit paramètre dans ladite mémoire non volatile afin de fournir une sauvegarde dudit paramètre lorsqu'une perte d'alimentation se produit et pour mettre à jour ledit paramètre, après une restauration de l'alimentation, conformément à un signal correspondant qui avait été stocké dans ladite mémoire non volatile avant la perte d'alimentation, où ledit processeur est adapté pour stocker ledit premier élément dudit élément correspondant de ladite pluralité des signaux dans un premier espace de mémoire et un second élément suivant dudit élément de ladite pluralité de signaux générés en réponse à l'utilisateur modifiant ledit paramètre dans un second espace mémoire pour réduire le nombre total des cycles d'accès à la mémoire dans ledit premier espace de mémoire, où le stockage du second élément dudit élément correspondant de ladite pluralité de signaux générés en réponse à l'utilisateur modifiant ledit paramètre dans ladite mémoire non volatile est empêché tant qu'une longueur d'un intervalle de temps entre des signaux suivants dudit élément correspondant de ladite pluralité de signaux générés en réponse à l'utilisateur modifiant ledit paramètre est plus courte qu'une valeur minimale prédéterminée.

2. Un procédé d'utilisation d'un appareil d'affichage vidéo, l'appareil comprenant :
une source d'une pluralité de signaux, chacun desdits signaux étant généré en réponse à un utilisateur modifiant un paramètre d'un traitement de signaux d'un signal vidéo dans ledit appareil d'affichage vidéo, ledit paramètre étant associé à l'une des sélections parmi la sélection du canal, la sélection du volume audio, la sélection de la netteté vidéo, la sélection du contraste, la sélection de la luminosité, la sélection de la couleur, la sélection de la teinte et la sélection du statut d'entrée vidéo/RF ;
une source dudit signal vidéo ;
une mémoire non volatile ; et
un processeur pour le contrôle dudit traitement de signal dudit signal vidéo, le procédé comprenant les étapes suivantes :
ledit processeur mettant à jour ledit paramètre en réponse à un élément correspondant de ladite pluralité de signaux,
ledit processeur stockant de manière sélective un premier élément dudit élément correspondant de ladite pluralité de signaux en réponse à l'utilisateur modifiant ledit paramètre dans un premier espace de mémoire de ladite mémoire non volatile pour fournir une sauvegarde dudit paramètre lorsqu'une perte d'alimentation se produit, ledit processeur stockant un second élément dudit élément correspondant de ladite pluralité de signaux générés en réponse à l'utilisateur modifiant ledit paramètre dans un deuxième espace de mémoire pour réduire le nombre total de cycles d'accès à la mémoire dans ledit premier espace de mémoire,
et
ledit processeur mettant à jour ledit paramètre, après une restauration de l'alimentation, conformément à un signal correspondant qui a été stocké dans ladite mémoire non volatile avant la perte d'alimentation, où le procédé comprend en outre
l'action d'empêcher le stockage du second élément dudit élément correspondant de ladite pluralité de signaux générés en réponse à l'utilisateur modifiant ledit paramètre dans ladite mémoire non volatile tant qu'une longueur d'un intervalle de temps entre des signaux suivants dudit élément correspondant de ladite pluralité de signaux générés en réponse à l'utilisateur modifiant ledit paramètre est plus courte qu'une valeur minimale prédéterminée.
